Europäisches Patentamt

**European Patent Office**

**Office européen des brevets**

(11) Publication number: **0 037 189**

**A1**

## (12) EUROPEAN PATENT APPLICATION

(21) Application number: **81300981.8**

(22) Date of filing: **09.03.81**

(51) Int. Cl.³: **C 09 D 3/52**

(30) Priority: **12.03.80 GB 8008438**

(43) Date of publication of application:
**07.10.81 Bulletin 81/40**

(84) Designated Contracting States:
**AT BE CH DE FR GB IT LI LU NL SE**

(71) Applicant: BRITISH INDUSTRIAL PLASTICS LIMITED
20 St. Mary's Parsonage
Manchester M3 2NL(GB)

(72) Inventor: Sreeves, John Ernest
38 Earlswood Road Dorridge
Solihull, West Midlands(GB)

(74) Representative: Newman, Dennis Daniel Ernest et al,
20, St. Mary's Parsonage
Manchester, M3 2NL.(GB)

(54) Liquid coating compositions.

(57) A liquid coating composition curable in film form at ambient temperature comprises the following reactive ingredients in the following proportions by weight:-

| | |
|---|---|
| aminoplast resin | 50-90% |
| hydroxyl-group-containing polymer | 5-25% |
| ε -caprolactone | 5-35% |

These reactive ingredients are dissolved together with an acid curing catalyst such as an arylsulphonic acid in an organic solvent of boiling point below 160°C. The composition has a viscosity not greater than about 2.5 poise at 25°C and a weight proportion solvent; reactive ingredients not greater than 3:2.

EP 0 037 189 A1

/

- 1 -

## Liquid Coating Compositions

This invention relates to liquid coating compositions,
and more particularly to liquid coating compositions
having a basis of aminoplast resin as the predominant
reactive ingredient, with a smaller proportion of a
polymer containing one or more hydroxyl groups.

Such liquid coating compositions can be made by
dissolving the aminoplast resin and the
hydroxyl-group-containing polymer in an organic solvent
of relatively low boiling point (bp less than 160°C),
for example a low molecular weight alcohol, ketone, or
ester, in which an acid such as an arylsulphonic acid is
included as curing catalyst. When the composition is
brushed or sprayed on or likewise applied to a surface
to be coated, for protection or decoration say, the
organic solvent quickly evaporates leaving behind a film
in which the aminoplast resin and the
hydroxyl-group-containing polymer react with one another
at ambient temperature under the influence of the
catalyst, forming a cured film. However, in order to
obtain such a composition having a viscosity low enough
to make it easily applicable (viscosity not greater than
about 2.5 poise at 25°C), the weight proportion of
organic solvent that has to be employed is relatively
high, being about 3:1 or more. The solvent forms no part
of the eventual cured coating, and is in that sense
wasted. Moreover, in evaporating it pollutes the
working environment.

The present invention provides an aminoplast resin/hydroxyl-group-containing polymer liquid coating composition of the kind defined in which the proportion of solvent employed is considerably reduced, so that less is wasted; and this composition includes the chemically reactive liquid known as ε-caprolactone, which is the lactone of 6-hydroxyhexanoic acid, boiling at about 230°C.

The use of ε-caprolactone as a reactive liquid in stoving lacquers of high resin content is proposed in British Patent Specification 1464061, Example 1 of which describes a coating composition curing at 125°C and comprising (by weight) 90 parts of an alkyd resin, 18 parts of aminoplast resin - in particular, a methylated (i.e. methyl-etherified) melamine-formaldehyde resin -, 18 parts of ε-caprolactone and 10 parts of ethyl glycol acetate (solvent), with p-toluene sulphonic acid as acid curing catalyst. The present invention differs in that it is applied to systems in which, of the reactive ingredients, the aminoplast resin predominates.

The invention arises from our discovery that, in the presence of the curing catalyst, ε-caprolactone reacts rapidly with such aminoplast-predominant systems at ambient temperature e.g. in the range 20-25°C.

According to the invention, there is provided a liquid coating composition curable in film form at ambient temperature comprising the following reactive ingredients in the following proportions by weight:-

| | |
|---|---|
| Aminoplast resin | 50-90% |
| Hydroxyl-group-containing polymer | 5-25% |
| ε-Caprolactone | 5-35% |

said reactive ingredients being dissolved together with an acid curing catalyst in an organic solvent of boiling point below 160°C; the composition having a viscosity not greater than about 2.5 poise at 25°C and having a weight proportion solvent; reactive ingredients not greater than 3:2.

The caprolactone in the composition of the invention functions essentially as co-solvent with the low-boiling organic solvent until evaporation of the latter has appreciably raised the concentration of the reactive ingredients. The caprolactone then reacts with the aminoplast and the hydroxyl-group-containing polymer ingredients, and so becomes incorporated in the coating that is formed i.e. it is usefully consumed and not wasted. Of course, the solvent of low boiling point is lost as previously, but the proportion of it thus lost is smaller in relation to the weight of composition employed and the weight of coating formed.

The invention has particular application to the preparation of ambient-temperature-curing compositions for coating wood, to give cured films which are resistant to wet heat, as encountered when hot drinks are spilled on them.

Preferably, the content of aminoplast resin in the composition is in the range 60-80% by weight of the total reactive ingredients.

The aminoplast resin may be a urea-formaldehyde or melamine-formaldehyde resin, particularly an alkylated one; and preferably an alkylated resin is employed in which the alkylating (etherifying) group is methyl, n-butyl or isobutyl.

The hydroxyl-group-containing polymer ingredient may be one of the kind known as 'non-convertible', that is to say, one which when dissolved in a solvent in the absence of a curing agent dries, simply by solvent evaporation to give a hard film. A particularly preferred hydroxyl-group-containing polymer of this class is polyvinylbutyral (see Example 1 later). Other such polymers which can be employed are nitro cellulose, cellulose acetate butyrate, and a vinyl chloride/vinyl acetate copolymer containing hydroxyl groups (see Example 2).

Alkyd resins form another class of hydroxyl-group-containing polymers which are useful in carrying out the invention. The use of such resins, which preferably have a molecular weight less than 7,500, is illustrated in Examples 3,4 and 5 later.

A variety of low-boiling organic liquids, singly or in admixture with one another, may be used as the solvent component of the coating composition, but most suitably a lower aliphatic alcohol or ketone (preferably one containing not more than 6 carbon atoms) is employed, optionally in admixture with a liquid aromatic hydrocarbon such as toluene or xylene.

The invention is further illustrated with reference to the following Examples.

EXAMPLE 1

The following ingredients were mixed together in the stated weight proportions to form a liquid coating composition of viscosity 2 poise (0.2 Pascal seconds) at 25°C and of weight ratio solvent; reactive ingredients = 1.07:1.

| | Parts | | Reactive Component | | Solvent Component |
|---|---|---|---|---|---|
| 1. n-Butylated urea-formaldehyde resin (60 parts) dissolved in xylol/n-butanol mixture (40 parts) | 117 | = | 70 | + | 47 |
| 2. Polyvinyl butyral (molecular weight = 50,000 - 60,000) as 20% solution in ethanol | 75 | = | 15 | + | 60 |
| 3. £- Caprolactone | 15 | = | 15 | | - |
| | | | 100 | | 107 |

Curing Catalyst (2 parts by weight):

p-toluenesulphonic acid

1. Available from British Industrial Plastics Ltd. as BE 640

2. Available from Hoechst Chemicals Ltd.

3. Available from Laporte Industries Ltd.

When applied by brushing at a level of 150grams/m$^2$ (dry film weight) to a wood surface, the composition formed a tack-free handlable film within 15 minutes at ambient temperature (21°C). The film was regularly inspected for crazing, and proved to be still craze-free after storage for 6 weeks at 20°C.

In the test for resistance to wet heat according to British Standard 3962; part 2; 1968, using the maximum temperature specified in the Standard (85°C), the cured film tested at 6 weeks from formation proved to have best rating (0).

### EXAMPLE 2

The following ingredients were mixed together in the stated weight proportions to form a liquid coating composition of viscosity rather less than 1 poise (0.1 Pa s) at 25°C and of weight ratio solvent; reactive ingredients = 1.07:1.

|  | Parts |  | Reactive Component |  | Solvent Component |
|---|---|---|---|---|---|
| 1. n-Butylated urea-formaldehyde resin (60 parts) dissolved in xylol/n-butanol mixture (40 parts) | 117 | = | 70 | + | 47 |
| 2. Vinyl chloride/ vinyl acetate copolymer containing OH groups (VINYLITE VROH available from Union Carbide Ltd) as 20% solution in methyl ethyl ketone | 75 | = | 15 | + | 60 |
| 3. Є- Caprolactone | 15 | = | 15 |  | - |
|  |  |  | 100 |  | 107 |

Curing catalyst (2 parts by weight): p-toluene sulphonic acid.

When applied by spraying at a level of 150 grams/m$^2$ (dry film weight) to a wood surface, the composition formed a tack-free handlable film within 15 minutes at ambient temperature (21°C). The film had properties at least as good as those in Example 1.

Further low-viscosity compositions are illustrated in Examples 3, 4 and 5 following.

EXAMPLE 3

|  | Parts by Weight | | Reactive Component | | Solvent Component |
|---|---|---|---|---|---|
| 1. n-Butylated urea-formaldehyde resin (60 parts) dissolved in xylol/butanol (40 parts) | 117 | = | 70 | + | 47 |
| 2. Castor oil modified alkyd (60 parts ; hydroxyl value, 90-95mg KOH/g) dissolved in xylol (40 parts) | 25 | = | 15 | + | 10 |
| 3. ε - caprolactone | 15 | = | 15 | + | 0 |
| 4. Xylol | 43 | = | 0 | + | 43 |
| | 200 | | 100 | | 100 |

Curing catalyst (2 parts by weight) = p-toluene sulphonic acid.

EXAMPLE 4

| | Parts by Weight | | Reactive Component | | Solvent Component |
|---|---|---|---|---|---|
| 1. n-Butylated urea-formaldehyde resin (60 parts) dissolved in xylol/butanol (40 parts) | 117 | = | 70 | + | 47 |
| 2. Sunflower oil modified alkyd (60 parts ; hydroxyl value, 95-100mg KOH/g) dissolved in xylol (40 parts) | 25 | = | 15 | + | 10 |
| 3. $\varepsilon$ - caprolactone | 15 | = | 15 | + | 0 |
| 4. Xylol | 43 | = | 0 | + | 43 |
| | 200 | | 100 | | 100 |

Curing catalyst (2 parts by weight) = p-toluene sulphonic acid.

When applied by brushing at a level of 150g/m$^2$ (dry film weight) to a wood surface, the compositions described in examples 3 and 4 formed a tack-free handlable film within 20 minutes at ambient temperature (21°C). The films were regularly inspected for crazing and proved to be still craze-free after storage for 12 weeks at 20°C.

In the test for resistance to wet heat according to British Standard 3962: part 2: 1968, using the maximum temperature specified (85°C), the cured films tested at 6 weeks from formation had a rating of 1-2.

/

EXAMPLE 5

| | Parts by Weight | Reactive Component | Solvent Component |
|---|---|---|---|
| 1. n-Butylated melamine formaldehyde resin (67 parts) dissolved in a mixture of isopropanol and butanol (33 parts) | 104.5 = | .70 + | 34.5 |
| 2. Sunflower oil modified alkyd (60 parts; hydroxyl value, 70-75mg KOH/g) dissolved in xylol (40 parts) | 37.5 = | 22.5 + | 15.0 |
| 3. $\varepsilon$ - caprolactone | 7.5 = | 7.5 + | 0 |
| 4. Xylol | 50.5 = | 0 + | 50.5 |
| | 200.0 | 100 | 100 |

Curing catalyst (6 parts by weight) = p-toluene sulphonic acid.

When applied by brushing at a level of 150g/m$^2$ (dry film weight) to a wood surface, the composition described in example 5 formed a tack-free handlable film within 30 minutes at ambient temperature (21°C). The films were regularly inspected for crazing and proved to be still craze-free after storage for 12 weeks at 20°C.

In the test for resistance to wet heat according to British Standard 3962: part 2: 1968, using the maximum temperature specified (85°C), the cured films tested at 2 weeks from formation had a rating of best (0).

CLAIMS:-

1. A liquid coating composition curable in film form at ambient temperature comprising the following reactive ingredients in the following proportions by weight;

| | |
|---|---|
| Aminoplast resin | 50-90% |
| Hydroxyl-group-containing polymer | 5-25% |
| ε-Caprolactone | 5-35% |

said reactive ingredients being dissolved together with an acid curing catalyst in an organic solvent of boiling point below 160°C; the composition having a viscosity not greater than 2.5 poise at 25°C and having a weight proportion solvent; reactive ingredients not greater than 3:2.

2. A liquid coating composition according to claim 1, in which the content of aminoplast resin is in the range 60-80% by weight of the total reactive ingredients.

3. A liquid coating composition according to claim 1 or 2, in which the aminoplast resin is a melamine- or urea-formaldehyde resin.

4. A liquid coating composition according to claim 3, in which said resin is an alkylated resin.

5. A liquid coating composition according to claim 4, in which said resin is an n-butylated resin.

6. A liquid coating composition according to any one of claims 1 to 5, in which said polymer containing hydroxyl groups is a non-convertible polymer.

7. A liquid coating composition according to claim 6, in which said polymer containing hydroxyl groups is polyvinyl butyral.

8. A liquid coating composition according to claim 6, in which said polymer containing hydroxyl groups is nitro cellulose.

9. A liquid coating composition according to claim 6, in which said polymer containing hydroxyl groups is cellulose acetate butyrate.

10. A liquid coating composition according to claim 6, in which said polymer containing hydroxyl groups is a vinyl chloride-vinyl acetate copolymer containing hydroxyl groups.

11. A liquid coating composition according to any one of claims 1 to 5, in which said polymer containing hydroxyl groups is an alkyd resin of molecular weight below 7,500.

12. A liquid coating composition according to claim 1, sustantially as hereinbefore described with reference to the Examples.

| | European Patent Office | EUROPEAN SEARCH REPORT | Application number EP 81 30 0981 |
| --- | --- | --- | --- |

## DOCUMENTS CONSIDERED TO BE RELEVANT

| Category | Citation of document with indication, where appropriate, of relevant passages | Relevant to claim |
| --- | --- | --- |
| | US - A - 3 959 201 (WEN-HSUAN-CHANG)<br>* Claims; column 8, lines 38-42 *<br>-- | 1 |
| DA | GB - A - 1 464 061 (BAYER)<br>* Claims * | 1 |
| | ----- | |

**CLASSIFICATION OF THE APPLICATION (Int. Cl.³)**

C 09 D 3/52

**TECHNICAL FIELDS SEARCHED (Int. Cl.³)**

C 09 D 3/50
3/52
3/49
3/12
3/76
3/66

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
| --- | --- | --- |
| The Hague | 03-07-1981 | DERAEDT |

EPO Form 1503.1   06.78